(19) Europäisches Patentamt
European Patent Office
Office européen des brevets

(11) EP 4 803 189 A1

(12) EUROPEAN PATENT APPLICATION
published in accordance with Art. 153(4) EPC

(43) Date of publication:
**09.09.2026 Bulletin 2026/37**

(21) Application number: **24885802.9**

(22) Date of filing: **31.10.2024**

(51) International Patent Classification (IPC):
***B01J 20/02*** *(2006.01)* ***B01D 15/00*** *(2006.01)*
***C01B 33/18*** *(2006.01)*

(52) Cooperative Patent Classification (CPC):
**B01D 15/00; B01J 20/02; B01J 20/30; B01J 20/34; C01B 33/18;** Y02P 10/20

(86) International application number:
**PCT/JP2024/038802**

(87) International publication number:
**WO 2025/095035 (08.05.2025 Gazette 2025/19)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **01.11.2023 JP 2023188027**
**24.07.2024 JP 2024118775**

(71) Applicant: **Mitsui Kinzoku Company, Limited**
**Tokyo 141-8584 (JP)**

(72) Inventors:
- **SUGAHARA, Kosei**
  **Ageo-shi, Saitama (JP)**
- **SASAKI, Hayato**
  **Ageo-shi, Saitama (JP)**

(74) Representative: **Novagraaf Technologies**
**2 rue Sarah Bernhardt**
**CS90017**
**92665 Asnières-sur-Seine Cedex (FR)**

# (54) POROUS MATERIAL AND METHOD FOR RECOVERING TARGET SUBSTANCE USING SAID POROUS MATERIAL

(57) A purpose of the present invention is to provide a porous material having excellent adsorption performance, and a method for recovering a target substance using the porous material, and, in order to achieve this purpose, the present invention provides a porous material including: a porous body having a co-continuous structure formed of: a ceramic skeleton (1) including mesopores (3); and macropores (2); and a sulfo group that modifies a surface of the ceramic skeleton (1), wherein an amount of the sulfo group contained in the porous material is 0.7 mmol/g or more and 5.0 mmol/g or less.

3 1 3 2 1 2
3
1
2
3
1
3
2
1
2
3
1
3
2
1
3
3
2
3
1
3
2

[FIG. 1]

EP 4 803 189 A1

## Description

### FIELD OF INVENTION

The present invention relates to a porous material, and a method for recovering a target substance using the porous material.

### BACKGROUND ART

From the viewpoints of carbon neutrality, SDGs, and the like, technologies related to reuse or recovery of target substances have attracted attention. Examples of such technologies include technologies for recovering metals or metal ions contained in liquids. As a porous material used for recovering target substances such as metals and metal ions, particulate porous silica subjected to surface treatment is known. For example, Patent Document 1 describes particulate porous silica having a co-continuous structure formed of: a ceramic skeleton including mesopores; and macropores. Patent Document 1 also describes that porous silica, the surface of which is modified with functional groups such as a thiol group, is useful for recovering target substances such as metals and metal ions.

CITATION LIST

PATENT DOCUMENT

Patent Document 1: International Publication No. WO 2017/002871

### SUMMARY OF INVENTION

TECHNICAL PROBLEM

A purpose of the present invention is to provide a porous material having excellent adsorption performance, and a method for recovering a target substance using the porous material.

SOLUTION TO PROBLEM

The present inventors have found that, in a porous material including a porous body having a co-continuous structure formed of: a ceramic skeleton including mesopores; and macropores, and a sulfo group that modifies a surface of the ceramic skeleton, the adsorption performance of the porous material can be improved by adjusting the amount of the sulfo group contained in the porous material to be 0.7 mmol/g or more and 5.0 mmol/g or less, thereby completing the present invention. Accordingly, the present invention encompasses the following inventions.

(1) A porous material including:

a porous body having a co-continuous structure formed of: a ceramic skeleton including mesopores; and macropores; and
a sulfo group that modifies a surface of the ceramic skeleton,
wherein an amount of the sulfo group contained in the porous material is 0.7 mmol/g or more and 5.0 mmol/g or less.

(2) The porous material according to [1], wherein the amount of the sulfo group is 3.6 mmol/g or more and 5.0 mmol/g or less.
(3) The porous material according to [1] or [2], wherein a most frequent pore diameter of the macropores of the porous body is 200 nm or more and 5000 nm or less.
(4) The porous material according to any one of [1] to [3], wherein a ratio of a most frequent pore diameter of the macropores of the porous body to a most frequent pore diameter of the mesopores of the porous body is 15 or more and 300 or less.
(5) The porous material according to any one of [1] to [4], wherein the ceramic skeleton of the porous body contains one or more elements selected from silicon, aluminum, tin, cerium, titanium, and zirconium.
(6) A method for recovering one or more target substances selected from metals and ions thereof; and metalloids and ions thereof from a solution containing the one or more target substances,
the method including a step of bringing the solution into contact with the porous material according to any one of [1] to

[5].
(7) The method according to [6], wherein the one or more target substances are selected from transition elements including rare earth elements, and ions thereof; and typical elements of Groups 1, 2, and 13 to 16, and ions thereof.

ADVANTAGEOUS EFFECTS OF INVENTION

According to the present invention, there are provided a porous material having excellent adsorption performance, and a method for recovering a target substance using the porous material.

## BRIEF DESCRIPTION OF DRAWINGS

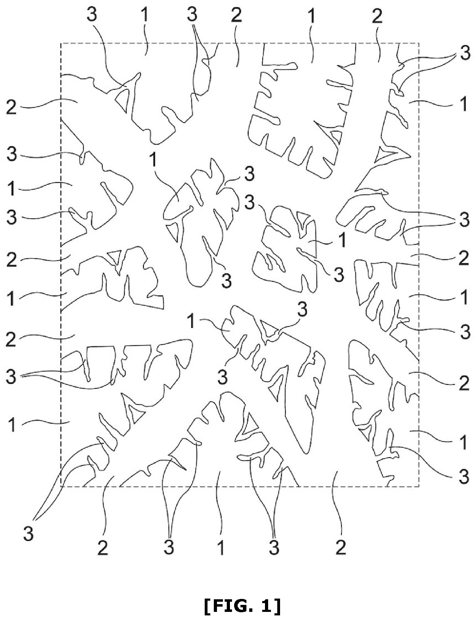

FIG. 1 is an enlarged view of a part of a surface of a porous body according to one embodiment of the present invention.

## DETAILED DESCRIPTION OF INVENTION

<<Definitions of Terms>>

The terms used in the present specification will be described below. Unless otherwise specified, the following descriptions apply throughout the present specification.

<Halogen Atom>

The term "halogen atom" includes a fluorine atom, a chlorine atom, a bromine atom, and an iodine atom.

<Alkyl Group>

The number of carbon atoms of an alkyl group is, for example, 1 to 20, preferably 1 to 10, more preferably 1 to 8, still more preferably 1 to 6, even more preferably 1 to 5, and particularly preferably 1 to 4. The alkyl group may be linear or branched. The number of carbon atoms of a linear alkyl group is 1 or more, and the number of carbon atoms of a branched alkyl group is 3 or more.

<Aryl Group>

An aryl group is, for example, a monocyclic or polycyclic (e.g., bicyclic or tricyclic) aromatic hydrocarbon ring group. The number of carbon atoms of the aryl group is, for example, 6 to 14, preferably 6 to 10. The polycyclic ring may be a fused ring. Examples of the aryl group include a phenyl group and a naphthyl group. The aryl group is preferably a phenyl group.

<Arylalkyl Group>

An arylalkyl group is an alkyl group having one or more aryl groups, and the alkyl group and the aryl group are as described above. The number of aryl groups contained in the arylalkyl group is, for example, 1 to 3, preferably 1 or 2, and more preferably 1.

<Alkylaryl Group>

An alkylaryl group is an aryl group having one or more alkyl groups, and the alkyl group and the aryl group are as described above. The number of alkyl groups contained in the alkylaryl group is, for example, 1 to 3, preferably 1 or 2, and more preferably 1.

<Alkyloxy Group>

An alkyloxy group is a group represented by the formula: -O-alkyl group, and the alkyl group is as described above.

<Aryloxy Group>

An aryloxy group is a group represented by the formula: -O-aryl group, and the aryl group is as described above.

<Arylalkyloxy Group>

An arylalkyloxy group is a group represented by the formula: -O-arylalkyl group, and the arylalkyl group is as described above.

<Alkylaryloxy Group>

An alkylaryloxy group is a group represented by the formula: -O-alkylaryl group, and the alkylaryl group is as described above.

<Alkylene Group and Arylene Group>

An alkylene group and an arylene group are bivalent functional groups obtained by removing one hydrogen atom from an alkyl group and an aryl group, respectively. The alkyl group and the aryl group are as described above.

<One or More Substituents>

The term "one or more substituents" refers to preferably 1 to 3 substituents, and more preferably 1 or 2 substituents. The one or more substituents may each independently be selected from, for example, a hydroxyl group, a carboxyl group, halogen atoms, a phosphate group, an oxo group, an alkyloxy group, an aryloxy group, an arylalkyloxy group, and an alkylaryloxy group.

<<Porous Body>>

The porous body has a co-continuous structure formed of: a ceramic skeleton including mesopores; and macropores. The porous body will be described below.

<Form and Shape of Porous Body>

The form of the porous body is not particularly limited. Examples of the form of the porous body include a particle, an aggregate, and a shaped body. The shape of the porous body is not particularly limited. Examples of the shape of the porous body include columnar, spherical (e.g., true spherical and ellipsoidal spherical), needle-like, scaly (flake-like), polyhedral, flattened, ground, and aggregated shapes. Examples of the columnar shape include cylindrical, elliptic cylindrical, and polygonal columnar shapes (e.g., quadrangular columnar, hexagonal columnar, and octagonal columnar shapes). The columnar shape may be a shape where, for example, such a cylindrical, elliptic cylindrical, or polygonal columnar shape is partially cut off.

In a case where the porous body is in the form of a particle, the particle size is, for example, 0.5 μm or more and 7.0 mm or less. The "particle size" refers to an equivalent circle diameter, namely, the diameter of a circle assumed to have the same area as the area of the particle in an observed image (e.g., SEM image) of the particle. The particle size can be adjusted by, for example, classification.

In a case where the porous body is in the form of a columnar body, the length is, for example, 1.0 mm or more and 500 mm or less, and the diameter is, for example, 1.5 mm or more and 20 mm or less. The "length" refers to the dimension in the direction in which the columnar body extends. The "diameter" refers to the diameter of an end face in the extension direction of the columnar body. In a case where the end face is circular, the "diameter" refers to the diameter of the circular end face. In a case where the end face has a shape other than a circular shape, the "diameter" refers to the diameter of a circle circumscribed around the end face.

<Structure of Porous Body Before Modification>

Hereinafter, a structure of a porous body before modification with a sulfo group will be described with reference to FIG. 1.

As illustrated in FIG. 1, the porous body has a co-continuous structure formed of: a ceramic skeleton 1 including mesopores 3; and macropores 2.

In the porous body, the ceramic skeleton 1 and the macropores 2 each have a continuous three-dimensional

network structure and are intertangled with each other, thereby forming the co-continuous structure. The fact that the porous body has the co-continuous structure can be confirmed by observing a surface or cross section of the porous body with a scanning electron microscope (SEM).

The most frequent pore diameter of the macropores 2 is preferably 200 nm or more, more preferably 400 nm or more, and still more preferably 600 nm or more, from the viewpoint of enhancement in adsorption performance. The most frequent pore diameter of the macropores 2 is preferably 5000 nm or less, more preferably 4500 nm or less, still more preferably 4000 nm or less, and even more preferably 3000 nm or less, from the same viewpoint. Each of these upper limit values may be combined with any of the lower limit values described above.

The "most frequent pore diameter of the macropores 2" refers to the most frequent pore diameter of the macropores, measured in a pore diameter range of 50 nm to 500 μm by a mercury intrusion method, as described in the Examples below.

The most frequent pore diameter of the mesopores 3 is preferably 2.0 nm or more, more preferably 5.0 nm or more, and still more preferably 10.0 nm or more, from the viewpoint of enhancement in adsorption performance. The most frequent pore diameter of the mesopores 3 is preferably 50.0 nm or less, more preferably 40.0 nm or less, and still more preferably 35.0 nm or less, from the same viewpoint. Each of these upper limit values may be combined with any of the lower limit values described above.

The "most frequent pore diameter of the mesopores 3" refers to the most frequent pore diameter of the mesopores, measured from a nitrogen adsorption-desorption isotherm by a BJH method, as described in the Examples below.

The ratio of the most frequent pore diameter of the macropores 2 to the most frequent pore diameter of the mesopores 3 is preferably 15 or more, more preferably 20 or more, still more preferably 30 or more, and even more preferably 40 or more, from the viewpoint of enhancement in adsorption performance. The ratio is preferably 300 or less, more preferably 200 or less, still more preferably 150 or less, and even more preferably 100 or less, from the same viewpoint. Each of these upper limit values may be combined with any of the lower limit values described above.

The specific surface area of the porous body, measured from a nitrogen adsorption-desorption isotherm by a BET method, is preferably 100 $m^2/g$ or more, more preferably 120 $m^2/g$ or more, and still more preferably 130 $m^2/g$ or more, from the viewpoint of enhancement in adsorption performance. The upper limit of the specific surface area of the porous body is not particularly limited, but is typically about 800 $m^2/g$. The method of measuring the specific surface area from a nitrogen adsorption-desorption isotherm by a BET method is as described in the Examples below.

The total pore volume of the porous body, measured by a mercury intrusion method, is preferably 1.5 mL/g or more and 4.0 mL/g or less, more preferably 1.8 mL/g or more and 3.5 mL/g or less, and still more preferably 2.5 mL/g or more and 3.5 mL/g or less, from the viewpoint of enhancement in adsorption performance. The method of measuring the total pore volume by a mercury intrusion method is as described in the Examples below.

The porosity of the porous body, measured by a mercury intrusion method, is preferably 70% or more and 90% or less, more preferably 70% or more and 85% or less, and still more preferably 75% or more and 85% or less, from the viewpoint of enhancement in adsorption performance. The method of measuring the porosity by a mercury intrusion method is as described in the Examples below.

<Material of Porous Body>

The ceramic constituting the ceramic skeleton is, for example, an oxide ceramic containing a metalloid element or a metal element. The ceramic skeleton 1 may contain one element selected from metalloid elements and metal elements, or may contain two or more elements selected from metalloid elements and metal elements.

Examples of the metalloid element include silicon. Examples of a silicon-containing oxide ceramic include silica ($SiO_2$).

Examples of the metal element include aluminum, tin, and transition metal elements such as cerium, titanium, zirconium, vanadium, chromium, iron, cobalt, nickel, palladium, platinum, copper, silver, gold, and zinc. Among these, the metal element is preferably selected from aluminum, tin, cerium, titanium, and zirconium, from the viewpoint of ease of production of the porous body. Examples of the oxide ceramic containing aluminum, tin, cerium, titanium, or zirconium include alumina ($Al_2O_3$), tin oxide ($SnO_2$), ceria ($CeO_2$), titania ($TiO_2$), and zirconia ($ZrO_2$).

The oxide ceramic may further contain, in addition to silicon, aluminum, tin, or a transition metal element, any element selected from alkali metal elements such as lithium and sodium, alkaline earth metal elements such as magnesium and calcium, and rare earth elements such as lanthanum, scandium, yttrium, and gadolinium.

<Method for Producing Porous Body >

The porous body can be produced by, for example, a method described in International Publication No. 2022/163834, specifically a method including the following steps of:

(a) producing a polymetalloxane gel by a sol-gel method;
(b) forming pores in a skeleton of the polymetalloxane gel produced in step (a); and
(c) firing the polymetalloxane gel subjected to step (b), optionally after washing and/or drying the polymetalloxane gel, to thereby produce a ceramic monolith (porous body).

In one embodiment, the ceramic monolith is preferably a silica monolith. The silica monolith has a co-continuous structure formed of: a silica skeleton including mesopores; and macropores.

In another embodiment, the ceramic monolith can be a monolith of alumina, tin oxide, ceria, titania, or zirconia. Also in such a case, the monolith has a co-continuous structure formed of: a skeleton of alumina, tin oxide, ceria, titania, or zirconia including mesopores; and macropores.

The ceramic monolith thus produced may be shaped and used as a porous body. Alternatively, a shaped ceramic monolith produced using a mold or the like may be used as is or, if necessary, shaped and used as a porous body. For example, the shaped ceramic monolith can be produced using a mold for shaping the gel into a desired shape in the gel producing step. The average diameter of the shaped ceramic monolith is smaller than the average diameter of the mold.

The ceramic monolith thus produced may be pulverized and used as a porous body. The pulverization can be performed according to a conventional method. The pulverization can be performed using, for example, a mortar, a hammer mill, a ball mill, a bead mill, a jet mill, or a roller mill. The particle size of the porous body after pulverization is preferably 0.5 μm or more and 7.0 mm or less, more preferably 2.0 μm or more and 5.0 mm or less, and still more preferably 5.0 μm or more and 3.0 mm or less. The "particle size" refers to an equivalent circle diameter, namely, the diameter of a circle assumed to have the same area as the area of the porous body after pulverization in an observed image (e.g., SEM image) of the porous body after pulverization.

<<Porous Material>>

The porous material of the present invention includes a porous body having a co-continuous structure formed of: a ceramic skeleton including mesopores; and macropores, and a sulfo group that modifies a surface of the ceramic skeleton. The sulfo group is a monovalent group represented by the formula: $-SO_3H$. The porous material of the present invention will be described below.

<Surface Modification>

The surface of the ceramic skeleton is modified with a sulfo group. The surface of the ceramic skeleton may be modified only with the sulfo group, or may be modified with one or more functional groups other than the sulfo group in addition to the sulfo group. The sulfo group may be directly bonded to the surface of the ceramic skeleton, or may be bonded to the surface of the ceramic skeleton via a linker.

The surface of the ceramic skeleton includes an internal surface and an external surface of the ceramic skeleton. The internal surface of the ceramic skeleton includes the internal surfaces of macropores and mesopores present inside the ceramic skeleton (i.e., not exposed on the external surface of the ceramic skeleton). The external surface of the ceramic skeleton includes the internal surfaces of macropores and mesopores exposed on the external surface of the ceramic skeleton. It is preferable that at least the internal surface of the ceramic skeleton be modified with a sulfo group.

In one embodiment, a compound having a sulfo group (hereinafter referred to as a "first compound") is fixed to the surface of the ceramic skeleton, whereby the surface of the ceramic skeleton is modified with a sulfo group. Examples of methods for introducing the first compound onto the surface of the ceramic skeleton include a method involving chemically fixing the first compound to the surface of the ceramic skeleton via a covalent bond, and a method involving physically fixing the first compound to the surface of the ceramic skeleton through an ionic bonding or physical interactions such as hydrophobic interactions. Examples of methods for chemically introducing the first compound onto the surface of the ceramic skeleton include a method involving reacting a functional group (e.g., a hydroxyl group) on the surface of the ceramic skeleton with the first compound to thereby chemically fix the first compound to the surface of the ceramic skeleton. The first compound may be fixed to the surface of the ceramic skeleton via a linker. For example, a functional group reactive with the first compound may be introduced onto the surface of the ceramic skeleton, and thereafter the introduced functional group and the first compound may be reacted to thereby chemically fix the first compound to the surface of the ceramic skeleton. Examples of methods for introducing a functional group reactive with the first compound onto the surface of the ceramic skeleton include a method involving reacting a functional group (e.g., a hydroxyl group) on the surface of the ceramic skeleton with a silane coupling agent having a functional group reactive with the first compound to thereby chemically fix the silane coupling agent to the surface of the ceramic skeleton. Examples of the silane coupling agent having a functional group reactive with the first compound include a silane coupling agent having an epoxy group and/or a haloalkyl group. Examples of the silane coupling agent having an epoxy group include 3-glycidyloxypropyltrimethoxysilane. Examples of the silane coupling agent having a haloalkyl group include 3-chloropropyltrimethoxysilane.

As a method for modifying the surface of the ceramic skeleton with a sulfo group, a method may be employed in which a compound containing a thiol group (-SH) (hereinafter referred to as a "second compound") is fixed to the surface of the ceramic skeleton, and thereafter the thiol group contained in the second compound is converted into a sulfo group. The second compound can be fixed to the surface of the ceramic skeleton in the same manner as the first compound. Conversion of the thiol group into a sulfo group can be performed in accordance with a conventional method. As in a case where, after the second compound has been fixed to the surface of the ceramic skeleton, the thiol group contained in the second compound is converted into a sulfo group, a case where a compound fixed to the surface of the ceramic skeleton does not initially contain a sulfo group, but the compound is derivatized so as to finally contain a sulfo group is encompassed by the expression "a compound having a sulfo group is fixed to the surface of the ceramic skeleton, whereby the surface of the ceramic skeleton is modified with a sulfo group".

Portions of the first compound other than the sulfo group and portions of the second compound other than the thiol group may each be composed of hydrogen atoms and carbon atoms, or may contain one or more other elements (for example, oxygen atoms, nitrogen atoms, halogen atoms, silicon atoms, and the like) in addition to hydrogen atoms and carbon atoms. As each of the first compound and the second compound, one or more compounds may be used, or two or more compounds may be used. The first compound and the second compound may be used in combination. As each of the first compound and the second compound, a silane coupling agent may be used.

The sulfo group introduced onto the surface of the ceramic skeleton is preferably fixed to the surface of the ceramic skeleton via a linker such as a silane coupling agent. When the linker is, for example, a silane coupling agent, the sulfo group can flexibly move while being fixed to the surface of the ceramic skeleton due to the carbon skeleton of the silane coupling agent. Accordingly, each sulfo group can more readily act on a target substance, and a plurality of sulfo groups can more readily act cooperatively on the target substance. As a result, compared with a case where sulfo groups are directly introduced onto the surface of the ceramic skeleton, the adsorption performance is higher.

Examples of silane coupling agents containing a sulfo group include silane coupling agents represented by formula A or B.

Formula A: $R^a\text{-}R^d\text{-}Si(\text{-}R^b)_n(\text{-}R^c)_{3-n}$

Formula B: $R^a\text{-}R^d\text{-}Si(\text{-}O\text{-}(R^e\text{-}O)_m\text{-}R^f)_n(\text{-}R^c)_{3-n}$

Examples of silane coupling agents containing a thiol group include silane coupling agents represented by formula C or D.

Formula C: $R^g\text{-}R^d\text{-}Si(\text{-}R^b)_n(\text{-}R^c)_{3-n}$

Formula D: $R^g\text{-}R^d\text{-}Si(\text{-}O\text{-}(R^e\text{-}O)_m\text{-}R^f)_n(\text{-}R^c)_{3-n}$

In formula A, $R^a$ represents a sulfo group; $R^b$ each independently represents an alkyl group; $R^c$ each independently represents an alkoxy group or a halogen atom; $R^d$ represents an alkylene group, an arylene group, or a combination thereof; and n represents an integer of 0 to 2.

In formula B, $R^a$, $R^c$, $R^d$, and n have the same meanings as in formula A; $R^e$ each independently represents an alkylene group; $R^f$ each independently represents an alkyl group; and m represents an integer of 1 to 5, preferably an integer of 1 to 3, more preferably an integer of 1 to 2.

In formula C, $R^b$, $R^c$, $R^d$, and n have the same meanings as in formula A, and $R^g$ represents a thiol group.

In formula D, $R^c$, $R^d$, and n have the same meanings as in formula A; $R^e$, $R^f$, and m have the same meanings as in formula B; and $R^g$ has the same meaning as in formula C.

Examples of the alkyl group represented by $R^b$ or $R^f$ include a methyl group, an ethyl group, a propyl group, and a butyl group.

Examples of the alkoxy group or halogen atom represented by $R^c$ include a methoxy group, an ethoxy group, a propoxy group, a butoxy group, a chlorine atom, a bromine atom, and an iodine atom. The alkoxy group represented by $R^c$ is preferably a methoxy group or an ethoxy group. The halogen atom represented by $R^c$ is preferably a chlorine atom.

Examples of the alkylene group represented by $R^d$ or $R^e$ include a methylene group, an ethylene group, a propylene group, and a butylene group.

Examples of the arylene group represented by $R^d$ include a phenylene group, a naphthylene group, and a biphenylene group.

Examples of the combination of the alkylene group and the arylene group represented by $R^d$ include groups represented by the formula -X-Y-, the formula -Y-X-, the formula -X-Y-X-, or the formula -Y-X-Y-. In the formulas, X represents an alkylene group, and Y represents an arylene group.

The alkylene group, the arylene group, or a combination thereof represented by $R^d$ may have one or more

substituents.

Examples of the silane coupling agent represented by formula A include 3-(trimethoxysilyl)-1-propanesulfonic acid.

Examples of the silane coupling agent represented by formula B include 3-(dimethoxy(2-methoxyethoxy)silyl)-1-propanesulfonic acid.

Examples of the silane coupling agent represented by formula C include 3-mercaptopropyltrimethoxysilane, 3-mercaptopropylmethyldimethoxysilane, and 3-mercaptopropyltriethoxysilane.

Examples of the silane coupling agent represented by formula D include ethoxy(3-mercaptopropyl) bis(3,6,9,12,15-pentaoxa-octacosan-1-yloxy)silane.

As the amount of sulfo groups introduced onto the surface of the ceramic skeleton increases, the adsorption performance is improved. Accordingly, from the viewpoint of effectively improving the adsorption performance of the porous material, the amount of sulfo groups contained in the porous material is 0.7 mmol/g or more, preferably 1.0 mmol/g or more, more preferably 1.3 mmol/g or more, and still more preferably 1.7 mmol/g or more, and even more preferably 3.6 mmol/g or more, based on the mass of the porous material. However, when sulfo groups are introduced via a linker, as the amount of sulfo groups introduced onto the surface of the ceramic skeleton increases, the amount of compounds introduced as the linker, for example, the amount of hydrocarbon groups (for example, alkyl groups, alkylene groups, arylene groups, and the like) possessed by silane coupling agents, also increases, thereby increasing the hydrophobicity of the porous material. When the hydrophobicity of the porous material increases, a solution containing a target substance is less likely to reach the inside of pores, and the sulfo groups introduced onto the surface of the ceramic skeleton cannot be effectively utilized, resulting in a decrease in adsorption performance. In addition, when sulfo groups are directly introduced onto the surface of the ceramic skeleton, the amount of sulfo groups introduced is affected by the skeleton structure of the porous material, and therefore has an upper limit. Accordingly, from the viewpoint of effectively improving the adsorption performance of the porous material, the amount of sulfo groups contained in the porous material is 5.0 mmol/g or less, preferably 4.5 mmol/g or less, and more preferably 4.0 mmol/g or less, based on the mass of the porous material. These upper limit values may each be combined with any of the above-mentioned lower limit values.

The above ranges for the amount of sulfo groups contained in the porous material are mainly applied when the porous material is used as an adsorbent. For example, when the porous material is used as an ion-exchange material, the amount of sulfo groups contained in the porous material may be adjusted within the above ranges or may be adjusted outside the above ranges.

The "amount of sulfo groups" refers to the amount of sulfur atoms derived from sulfo groups contained in the porous material. When all sulfur atoms contained in the porous material are sulfur atoms derived from sulfo groups, the "amount of sulfo groups" refers to the amount of all sulfur atoms contained in the porous material. The amount of sulfo groups can be measured in accordance with a conventional method. For example, the amount of sulfo groups can be measured by the method described in Examples below.

<Method for Producing Porous Material>

In one embodiment, the porous material of the present invention can be produced by a method including the following steps of:

(1) modifying the surface of the ceramic skeleton of a porous body with thiol groups; and
(2) converting the thiol groups into sulfo groups.

This method is advantageous in that the amount of sulfo groups contained in the porous material can be easily adjusted.

Step (1) can be performed by bringing a porous body and a reagent for modifying the surface of the ceramic skeleton of the porous body with thiol groups (hereinafter referred to as a "first reagent") into contact with each other in a first solvent.

As the first reagent, for example, a compound having a thiol group can be used, preferably a silane coupling agent having a thiol group, and more preferably a silane coupling agent represented by formula C or D.

As the first solvent, for example, water, an aqueous solution, or a mixed solution of an organic solvent and either an aqueous solution or water can be used.

The aqueous solution can be prepared by adding an acid to water. The acid can be selected from, for example, acetic acid, hydrochloric acid, nitric acid, sulfuric acid, phosphoric acid, and the like. Among these, acetic acid is preferable. The concentration of acetic acid in the aqueous solution is, for example, 0.01 % by mass or more and 5.0 % by mass or less.

As the organic solvent, for example, alcohol solvents such as methanol, ethanol, and propanol; ether solvents such as tetrahydrofuran and 2-methyltetrahydrofuran; ketone solvents such as acetone and methyl ethyl ketone; ester solvents such as methyl acetate and ethyl acetate; halogenated hydrocarbon solvents such as dichloromethane and

chloroform; aromatic hydrocarbon solvents such as toluene and xylene; and aliphatic hydrocarbon solvents such as hexane and heptane can be used.

The temperature at which the porous body and the first reagent are brought into contact with each other in the first solvent is, for example, 60°C or higher and 100°C or lower. The time for which the porous body and the first reagent are brought into contact with each other in the first solvent is, for example, 2 hours or more and 24 hours or less.

After modifying the surface of the ceramic skeleton of the porous body with thiol groups, the thiol group-modified porous body is separated from the reaction mixture by using a solid-liquid separation method such as filtration. The separated porous body is washed with a washing liquid such as pure water and then dried, and is used in step (2).

Step (2) can be performed by bringing the thiol group-modified porous body obtained in step (1) and a reagent for converting thiol groups into sulfo groups (hereinafter referred to as a "second reagent") into contact with each other in a second solvent.

As the second reagent, for example, an oxidizing agent such as hydrogen peroxide, nitric acid, or meta-chloroperbenzoic acid can be used. An aqueous solution containing an oxidizing agent may be used as the second reagent. The aqueous solution containing an oxidizing agent can be prepared by adding the oxidizing agent to water. When an aqueous solution containing hydrogen peroxide is used as the second reagent, the concentration of hydrogen peroxide in the aqueous solution is, for example, 10.0 % by mass or more and 60.0 % by mass or less.

As the second solvent, for example, water can be used. When hydrogen peroxide or an aqueous solution containing hydrogen peroxide is used as the second reagent, the concentration of hydrogen peroxide in the second solvent is, for example, 5.0 % by mass or more and 30.0 % by mass or less.

The temperature at which the thiol group-modified porous body and the second reagent are brought into contact with each other in the second solvent is, for example, 40°C or higher and 80°C or lower. The time for which the thiol group-modified porous body and the second reagent are brought into contact with each other in the second solvent is, for example, 0.5 hours or more and 12 hours or less.

After converting the thiol groups contained in the thiol group-modified porous body into sulfo groups, the sulfo group-modified porous body is separated from the reaction mixture by using a solid-liquid separation method such as filtration. The separated porous body is washed with a washing liquid such as pure water and then dried. Thus, the porous material of the present invention can be obtained.

In another embodiment, the porous material of the present invention can be produced by a method including a step of directly modifying the surface of the ceramic skeleton of a porous body with sulfo groups. As such a method, for example, the method described in RSC Adv. 2017, 7, pp. 56559-56565 can be used. According to the method described in this literature, the surface of the ceramic skeleton of a porous body can be directly modified with sulfo groups by adding chlorosulfonic acid to the porous body and stirring.

<Applications>

The porous material of the present invention can be used for applications utilizing the function of sulfo groups.

In one embodiment, the porous material of the present invention can be used as an ion-exchange material.

Sulfo groups can adsorb one or more target substances selected from the group consisting of metals and ions thereof, and metalloids and ions thereof. Accordingly, in one embodiment, the porous material of the present invention is useful as an adsorbent for adsorbing one or more target substances selected from the above group, and can be used for recovering one or more target substances selected from the above group.

Examples of the metals and ions thereof and the metalloids and ions thereof include transition elements and ions thereof, and typical elements of Groups 1, 2, and 13 to 16 and ions thereof.

The transition elements include Ti, V, Cr, Mn, Fe, Co, Ni, Cu, Zr, Nb, Mo, Tc, Ru, Rh, Pd, Ag, Hf, Ta, W, Re, Os, Ir, Pt, Au, Zn, Cd, Hg, and rare earth elements.

The rare earth elements include Sc, Y, La, Ce, Pr, Nd, Pm, Sm, Eu, Gd, Tb, Dy, Ho, Er, Tm, Yb, and Lu.

The typical elements of Groups 1, 2, and 13 to 16 include Li, Na, K, Rb, Cs, Be, Mg, Ca, Sr, Ba, B, Al, Si, Ga, Ge, As, Se, In, Sn, Sb, Te, Tl, Pb, Bi, Po, and At. Among these, B, Si, Ge, As, Se, Po, At, Sb, and Te are metalloids.

Sulfo groups exhibit particularly high adsorption performance for Co, Fe, and Ni among the transition elements, for Y and La among the rare earth elements, and for Sr and Zn among the typical elements. Accordingly, the porous material of the present invention is particularly useful as an adsorbent for adsorbing one or more target substances selected from these elements.

Examples of the forms of metals and metalloids adsorbed on sulfo groups include metal nanoparticles and metalloid nanoparticles. The metals and ions thereof and the metalloids and ions thereof adsorbed on sulfo groups may each have a ligand or may not have a ligand.

<<Method for Recovering Target Substance >>

The method for recovering a target substance of the present invention is a method for recovering one or more target substances from a solution containing one or more target substances selected from metals and ions thereof, and metalloids and ions thereof (hereinafter referred to as a "liquid to be treated"), and includes a step of bringing the liquid to be treated into contact with the porous material of the present invention.

When the liquid to be treated is brought into contact with the porous material of the present invention, one or more target substances contained in the liquid to be treated are adsorbed on the porous material of the present invention. As a result, one or more target substances can be recovered from the liquid to be treated.

Examples of the liquid to be treated include waste liquid discharged from plants or the like, and wastewater containing valuable metals discharged from metal refining processes. The liquid to be treated usually contains water. The waste liquid or wastewater may be subjected to a pretreatment, as necessary, before being brought into contact with the porous material of the present invention.

The one or more target substances contained in the liquid to be treated can be selected from, for example, transition metals including rare earth metals, and ions thereof, and typical elements of Groups 1, 2, and 13 to 16, and ions thereof. Sulfo groups exhibit particularly high adsorption performance for Co, Fe, and Ni among the transition elements, for Y and La among the rare earth elements, and for Sr and Zn among the typical elements. Accordingly, the one or more target substances contained in the liquid to be treated are preferably selected from these elements.

Examples of methods for bringing the liquid to be treated into contact with the porous material of the present invention include a method of immersing the porous material of the present invention in the liquid to be treated, and a method of passing the liquid to be treated through a column packed with the porous material of the present invention. The passing can be performed, for example, by using a liquid feeding pump.

The porous material of the present invention is particularly useful for recovering each target substance from a liquid to be treated in which the concentration of each target substance is low (for example, the concentration of each target substance is 0.1 ppm or more and 5000 ppm or less, in particular 0.1 ppm or more and 100 ppm or less).

## EXAMPLES

Hereinafter, the present invention will be further specifically described with reference to Examples and Comparative Examples; however, the scope of the present invention is not limited to these Examples and Comparative Examples.

### [Example 1]

(1) Production of silica monolith

To a 150 mL reaction vessel, 8.67 g of polyethylene glycol 10000 (manufactured by SIGMA-ALDRICH Co., LLC), 7.80 g of urea, and 86.7 g of an acetic acid aqueous solution (acetic acid concentration: 6.06 % by mass) were added, and stirred at room temperature for 10 minutes. The reaction vessel was placed in an ice bath, and the reaction solution was cooled with stirring for 15 minutes. To the cooled reaction solution, 44.7 g of tetramethoxysilane was added, and stirred for 30 minutes while being cooled in the ice bath. The reaction solution was warmed in a warm bath at 30°C, and then allowed to stand overnight in an incubator at 30°C to thereby produce a polysiloxane gel.

Next, the obtained polysiloxane gel was added to another reaction vessel containing 30 mL of 3 mol/L aqueous urea solution, and heated and refluxed for 12 hours. After completion of the reaction, the obtained polysiloxane gel was washed with water, and dried in a dryer set at 60°C for 12 hours. After drying, the polysiloxane gel was fired at 600°C for 5 hours in an air atmosphere to produce a silica monolith. The obtained silica monolith was pulverized and classified to obtain a silica monolith having a particle size of 100 μm or more and 300 μm or less.

(2) Observation with scanning electron microscope (SEM)

The surface structure of the silica monolith obtained in (1) above was observed using an SEM (JSM-7900F manufactured by JEOL Ltd.). As a result, it was confirmed that the silica monolith has a co-continuous structure formed of a silica skeleton and macropores.

(3) Measurement of specific surface area and most frequent pore diameter of mesopores

The specific surface area and the most frequent pore diameter of mesopores of the silica monolith obtained in (1) above were measured using a specific surface area/pore distribution measuring apparatus (BELSORP-miniX manu-

factured by Microtrac-BEL Corp.). After degassing the silica monolith under reduced pressure at 400°C for 3 hours, the amounts of adsorption and desorption of nitrogen at a temperature of 77 K using liquid nitrogen were measured by a multipoint method, thereby determining an adsorption-desorption isotherm. Based on the adsorption-desorption isotherm, the specific surface area and the most frequent pore diameter were calculated. The specific surface area was calculated by the BET method, and the most frequent pore diameter was calculated by the BJH method.

The BJH method is a method of analyzing the distribution of pore volume with respect to pore diameter under the assumption that pores are cylindrical according to the standard model of Barrett-Joyner-Halenda (for details, see J. Amer. Chem. Soc., 73, 373, 1951). In the present invention, the analysis was conducted in the pore diameter range of 2 to 200 nm.

(4) Measurement of total pore volume, most frequent pore diameter of macropores, and porosity

The total pore volume, most frequent pore diameter of macropores, and porosity of the silica monolith obtained in (1) above were measured using a mercury porosimeter (AutoPore IV 9520 manufactured by Micromeritics Instrument Corporation) by the mercury intrusion method. In the mercury intrusion method, mercury was allowed to penetrate into pores of the silica monolith by applying pressure, the pore volume and the specific surface area were determined from the pressure and the amount of mercury intruded, and the pore diameter was calculated based on the relationship between the pore volume and the specific surface area under the assumption that pores are cylindrical. In the present invention, the analysis was conducted in the pore diameter range of 50 nm to 500 μm by the mercury intrusion method. The measurements were conducted under the following conditions and procedures.

(Measurement conditions)

- Mercury parameters

  Advancing contact angle: 130.0°
  Receding contact angle: 130.0°
  Surface tension: 485.0 mN/m (485.0 dynes/cm)
  Mercury density: 13.5335 g/mL

- Low-pressure parameters

  Discharge pressure: 50 μmHg
  Discharge time: 5.0 minutes
  Mercury intrusion pressure: 0.0035 MPa
  Equilibrium time: 10 seconds

- High-pressure parameters
  Equilibrium time: 10 seconds
- Intrusion volume: modulated to 25% or more and 90% or less
- Measurement environment: 20°C

(Measurement procedure)

(i) Weigh about 0.5 g of a sample, place it in a specimen cell, and input a weighed value.
(ii) Measure in the pressure range of 0.0048 to 0.2068 MPa at a low-pressure portion.
(iii) Measure in the pressure range of 0.2068 to 255.1060 MPa at a high-pressure portion.

(ii) and (iii) were automatically performed using the software provided with the apparatus.

The results of (3) and (4) above are shown in Table 1.

[Table 1]

Table 1

| | | Before Surface Modification | | | | | |
|---|---|---|---|---|---|---|---|
| | | Specific surface area ($m^2/g$) | Most frequent pore diameter of macropores (nm) | Most frequent pore diameter of mesopores (nm) | Most frequent pore diameter of macropores / Most frequent pore diameter of mesopores | Total pore volume (mL) | Porosity (%) |
| Examples | 1 | 333 | 1284 | 19 | 67.6 | 3.4 | 82.4 |
| | 2 | 333 | 1284 | 19 | 67.6 | 3.4 | 82.4 |
| | 3 | 333 | 1284 | 19 | 67.6 | 3.4 | 82.4 |
| | 4 | 333 | 1284 | 19 | 67.6 | 3.4 | 82.4 |
| | 5 | 333 | 1284 | 19 | 67.6 | 3.4 | 82.4 |
| | 6 | 333 | 1284 | 19 | 67.6 | 3.4 | 82.4 |
| | 7 | 610 | 313 | 13 | 24.1 | 2.9 | 79.6 |
| | 8 | 293 | 4636 | 18 | 257.6 | 3.3 | 82.7 |
| | 9 | 352 | 455 | 12 | 38.0 | 2.8 | 79.8 |
| | 10 | 248 | 609 | 32 | 19.0 | 2.9 | 79.4 |
| Comparative Examples | 1 | 333 | 1284 | 19 | 67.6 | 3.4 | 82.4 |
| | 2 | - | - | - | - | - | - |
| | 3 | 333 | 1284 | 19 | 67.6 | 3.4 | 82.4 |

(5) Production of thiol group-modified silica monolith

To a reaction vessel, 2.04 g of 3-mercaptopropyltrimethoxysilane, which had been stirred at room temperature for 1 hour, 35 mL of an aqueous acetic acid solution (acetic acid concentration: 0.1 % by mass), and 5.0 g of the silica monolith obtained in (1) above were added. After allowing the mixture to stand at room temperature for 30 minutes, the mixture was

heated at 80°C for 4 hours, thereby producing a thiol group-modified silica monolith. The thiol group-modified silica monolith was separated from the solution by filtration, washed with 500 mL of pure water, and dried to obtain 5.91 g of a thiol group-modified silica monolith.

(6) Production of sulfo group-modified silica monolith

To a reaction vessel, 3.0 g of the thiol group-modified silica monolith obtained in (5) above, 15 mL of an aqueous hydrogen peroxide solution (hydrogen peroxide concentration: 30 % by mass), and 15 mL of pure water were added, and the mixture was heated at 60°C for 1 hour to convert thiol groups into sulfo groups, thereby producing a sulfo group-modified silica monolith. The sulfo group-modified silica monolith was separated from the solution by filtration, washed with 500 mL of pure water, and dried to obtain 3.09 g of a sulfo group-modified silica monolith.

(7) Measurement of amount of sulfo groups

The amount of sulfur atoms contained in the sulfo group-modified silica monolith obtained in (6) above was measured using a carbon-sulfur analyzer (EMIA-Expert, manufactured by HORIBA, Ltd.). The measured amount of sulfur atoms was defined as the amount of sulfo groups contained in the sulfo group-modified silica monolith. The results are shown in Table 2.

(8) Metal adsorption test by solution immersion

120 mg of the sulfo group-modified silica monolith obtained in (6) above was immersed in 30 mL of an aqueous solution (Co concentration: 100 ppm, pH: 2) prepared by diluting a cobalt standard solution (Co 1000, manufactured by Kanto Chemical Co., Inc.) 10-fold with pure water, and the mixture was stirred at 25°C for 30 minutes at 400 rpm. After completion of the reaction, the sulfo group-modified silica monolith was separated by filtration, and the amount of Co element contained in the obtained filtrate was analyzed using an ICP emission spectrometer (SPECTROGREEN FMD46, manufactured by Hitachi High-Tech Science Corporation). The percentage of the amount of Co element adsorbed on the sulfo group-modified silica monolith relative to the amount of Co element initially contained in the aqueous solution (hereinafter referred to as the "Co adsorption ratio") was calculated. The Co adsorption ratio is shown in Table 2.

120 mg of the sulfo group-modified silica monolith obtained in (6) above was immersed in 30 mL of an aqueous solution (Fe concentration: 100 ppm, pH: 2) prepared by diluting an iron standard solution (Fe 1000, manufactured by Kanto Chemical Co., Inc.) 10-fold with pure water, and the mixture was stirred at 25°C for 30 minutes at 400 rpm. After completion of the reaction, the sulfo group-modified silica monolith was separated by filtration, and the amount of Fe element contained in the obtained filtrate was analyzed using an ICP emission spectrometer (SPECTROGREEN FMD46, manufactured by Hitachi High-Tech Science Corporation). The percentage of the amount of Fe element adsorbed on the sulfo group-modified silica monolith relative to the amount of Fe element initially contained in the aqueous solution (hereinafter referred to as the "Fe adsorption ratio") was calculated. The Fe adsorption ratio is shown in Table 2.

120 mg of the sulfo group-modified silica monolith obtained in (6) above was immersed in 30 mL of an aqueous solution (Zn concentration: 100 ppm, pH: 2) prepared by diluting a zinc standard solution (Zn 1000, manufactured by Kanto Chemical Co., Inc.) 10-fold with pure water, and the mixture was stirred at 25°C for 30 minutes at 400 rpm. After completion of the reaction, the sulfo group-modified silica monolith was separated by filtration, and the amount of Zn element contained in the obtained filtrate was analyzed using an ICP emission spectrometer (SPECTROGREEN FMD46, manufactured by Hitachi High-Tech Science Corporation). The percentage of the amount of Zn element adsorbed on the sulfo group-modified silica monolith relative to the amount of Zn element initially contained in the aqueous solution (hereinafter referred to as the "Zn adsorption ratio") was calculated. The Zn adsorption ratio is shown in Table 2.

120 mg of the sulfo group-modified silica monolith obtained in (6) above was immersed in 30 mL of an aqueous solution (Ni concentration: 100 ppm, pH: 2) prepared by diluting a nickel standard solution (Ni 1000, manufactured by Kanto Chemical Co., Inc.) 10-fold with pure water, and the mixture was stirred at 25°C for 30 minutes at 400 rpm. After completion of the reaction, the sulfo group-modified silica monolith was separated by filtration, and the amount of Ni element contained in the obtained filtrate was analyzed using an ICP emission spectrometer (SPECTROGREEN FMD46, manufactured by Hitachi High-Tech Science Corporation). The percentage of the amount of Ni element adsorbed on the sulfo group-modified silica monolith relative to the amount of Ni element initially contained in the aqueous solution (hereinafter referred to as the "Ni adsorption ratio") was calculated. The Ni adsorption ratio is shown in Table 2.

120 mg of the sulfo group-modified silica monolith obtained in (6) above was immersed in 30 mL of an aqueous solution (Sr concentration: 100 ppm, pH: 2) prepared by diluting a strontium standard solution (Sr 1000, manufactured by Kanto Chemical Co., Inc.) 10-fold with pure water, and the mixture was stirred at 25°C for 30 minutes at 400 rpm. After completion of the reaction, the sulfo group-modified silica monolith was separated by filtration, and the amount of Sr element contained in the obtained filtrate was analyzed using an ICP emission spectrometer (SPECTROGREEN FMD46,

manufactured by Hitachi High-Tech Science Corporation). The percentage of the amount of Sr element adsorbed on the sulfo group-modified silica monolith relative to the amount of Sr element initially contained in the aqueous solution (hereinafter referred to as the "Sr adsorption ratio") was calculated. The Sr adsorption ratio is shown in Table 2.

120 mg of the sulfo group-modified silica monolith obtained in (6) above was immersed in 30 mL of an aqueous solution (concentrations of Fe and Pd: each 100 ppm, pH: 2) prepared by diluting an iron standard solution (Fe 1000, manufactured by Kanto Chemical Co., Inc.) and a palladium standard solution (Pd 1000, manufactured by Kanto Chemical Co., Inc.) 10-fold with pure water, followed by adjusting the pH to 2 with sodium carbonate, and the mixture was stirred at 25°C for 30 minutes at 400 rpm. After completion of the reaction, the sulfo group-modified silica monolith was separated by filtration, and the amounts of Fe and Pd elements contained in the obtained filtrate were analyzed using an ICP emission spectrometer (SPECTROGREEN FMD46, manufactured by Hitachi High-Tech Science Corporation). The Fe selectivity calculated according to the following formula is shown in Table 2.

Fe selectivity = (Amount of Fe element adsorbed on the sulfo group-modified silica monolith) / (Total amount of Fe and Pd elements adsorbed on the sulfo group-modified silica monolith)

[Table 2]

Table 2

| | | Amount of sulfo group (mmol/g) | Adsorption test results | | | | | |
|---|---|---|---|---|---|---|---|---|
| | | | Co adsorption ratio (%) | Fe adsorption ratio (%) | Zn adsorption ratio (%) | Ni adsorption ratio (%) | Sr adsorption ratio (%) | Fe selectivity |
| Examples | 1 | 1.0 | 67 | 61 | 70 | 66 | 93 | 0.89 |
| | 2 | 1.3 | 83 | 82 | 88 | 80 | 98 | 0.87 |
| | 3 | 1.5 | 93 | 91 | 96 | 92 | 99 | 0.91 |
| | 4 | 1.7 | 96 | 98 | 98 | 95 | 97 | 0.89 |
| | 5 | 1.9 | 97 | 97 | 98 | 97 | 90 | 0.90 |
| | 6 | 4.1 | 92 | 89 | 91 | 89 | 97 | 0.71 |
| | 7 | 1.6 | 91 | 89 | 95 | 91 | 94 | 0.92 |
| | 8 | 1.3 | 89 | 84 | 95 | 89 | 94 | 0.91 |
| | 9 | 1.7 | 94 | 92 | 95 | 92 | 81 | 0.92 |
| | 10 | 1.9 | 95 | 96 | 97 | 94 | 90 | 0.90 |
| Comparative Examples | 1 | 0.6 | 39 | 33 | 39 | 36 | 58 | 0.82 |
| | 2 | 0.7 | 57 | 49 | 61 | 58 | 81 | 0.93 |
| | 3 | 2.1 | 0 | 0 | 0 | 5 | 0 | 0.01 |

It should be noted that, in the sulfo group-modified silica monolith of the present invention, when the Fe selectivity

is 0.7 or more, it can be determined that thiol groups do not remain in the sulfo group-modified silica monolith (that is, the thiol groups contained in the thiol group-modified silica monolith have been completely converted into sulfo groups).

[**Example 2**]

The same operation as in Example 1 was performed, except that the amount of 3-mercaptopropyltrimethoxysilane used in the production of the thiol group-modified silica monolith was changed to 3.06 g, thereby producing and evaluating a sulfo group-modified silica monolith. The results are shown in Tables 1 and 2.

[**Example 3**]

The same operation as in Example 1 was performed, except that the amount of 3-mercaptopropyltrimethoxysilane used in the production of the thiol group-modified silica monolith was changed to 4.08 g, thereby producing and evaluating a sulfo group-modified silica monolith. The results are shown in Tables 1 and 2.

[**Example 4**]

The same operation as in Example 1 was performed, except that the amount of 3-mercaptopropyltrimethoxysilane used in the production of the thiol group-modified silica monolith was changed to 5.11 g, thereby producing and evaluating a sulfo group-modified silica monolith. The results are shown in Tables 1 and 2.

[**Example 5**]

The same operation as in Example 1 was performed, except that the amount of 3-mercaptopropyltrimethoxysilane used in the production of the thiol group-modified silica monolith was changed to 6.13 g, thereby producing and evaluating a sulfo group-modified silica monolith. The results are shown in Tables 1 and 2.

[**Example 6**]

The same operation as in Example 1 was performed, except that the amount of 3-mercaptopropyltrimethoxysilane used in the production of the thiol group-modified silica monolith was changed to 16.4 g, thereby producing and evaluating a sulfo group-modified silica monolith. The results are shown in Tables 1 and 2.

[**Example 7**]

The same operation as in Example 1 was performed, except that the amount of polyethylene glycol 10000 (manufactured by SIGMA-ALDRICH Co., LLC) used in the production of the silica monolith was changed to 9.97 g, thereby producing and evaluating a sulfo group-modified silica monolith. The results are shown in Tables 1 and 2. It was confirmed that the produced silica monolith has a co-continuous structure by SEM observation in the same manner as in Example 1.

[**Example 8**]

The same operation as in Example 1 was performed, except that the amount of polyethylene glycol 10000 (manufactured by SIGMA-ALDRICH Co., LLC) used in the production of the silica monolith was changed to 7.08 g, thereby producing and evaluating a sulfo group-modified silica monolith. The results are shown in Tables 1 and 2. It was confirmed that the produced silica monolith has a co-continuous structure by SEM observation in the same manner as in Example 1.

[**Example 9**]

The same operation as in Example 1 was performed, except that the heating and reflux time in 3 mol/L aqueous urea solution during the production of the silica monolith was changed to 5 hours, thereby producing and evaluating a sulfo group-modified silica monolith. The results are shown in Tables 1 and 2. It was confirmed that the produced silica monolith has a co-continuous structure by SEM observation in the same manner as in Example 1.

[**Example 10**]

The same operation as in Example 1 was performed, except that the heating and reflux time in 3 mol/L aqueous urea solution during the production of the silica monolith was changed to 24 hours, thereby producing and evaluating a

sulfo group-modified silica monolith. The results are shown in Tables 1 and 2. It was confirmed that the produced silica monolith has a co-continuous structure by SEM observation in the same manner as in Example 1.

[**Comparative Example 1**]

The same operation as in Example 1 was performed, except that the amount of 3-mercaptopropyltrimethoxysilane used in the production of the thiol group-modified silica monolith was changed to 1.02 g, thereby producing and evaluating a sulfo group-modified silica monolith. The results are shown in Tables 1 and 2.

[**Comparative Example 2**]

The same evaluation as in Example 1 was performed using a commercially available sulfo group-modified silica (manufactured by Aldrich). The results are shown in Table 2. The commercially available sulfo group-modified silica used does not have a co-continuous structure. Since specific surface area, most frequent macropore diameter, most frequent mesopore diameter, total pore volume, and porosity were not measured, these items are indicated by "-" in Table 1.

[**Comparative Example 3**]

The same operation as in Example 1 was performed, except that a thiol group-modified silica monolith was produced by changing the amount of 3-mercaptopropyltrimethoxysilane used to 4.08 g and that the produced thiol group-modified silica monolith was used without converting thiol groups into sulfo groups, thereby producing and evaluating a thiol group-modified silica monolith. The results are shown in Tables 1 and 2.

DESCRIPTION OF REFERENCE SIGNS

1 Ceramic skeleton
2 Macropores
3 Mesopores

**Claims**

**1.** A porous material comprising:

a porous body having a co-continuous structure formed of: a ceramic skeleton comprising mesopores; and macropores; and
a sulfo group that modifies a surface of the ceramic skeleton,
wherein an amount of the sulfo group contained in the porous material is 0.7 mmol/g or more and 5.0 mmol/g or less.

**2.** The porous material according to claim 1, wherein the amount of the sulfo group is 3.6 mmol/g or more and 5.0 mmol/g or less.

**3.** The porous material according to claim 1 or 2, wherein a most frequent pore diameter of the macropores of the porous body is 200 nm or more and 5000 nm or less.

**4.** The porous material according to claim 1 or 2, wherein a ratio of a most frequent pore diameter of the macropores of the porous body to a most frequent pore diameter of the mesopores of the porous body is 15 or more and 300 or less.

**5.** The porous material according to claim 1 or 2, wherein the ceramic skeleton of the porous body comprises one or more elements selected from silicon, aluminum, tin, cerium, titanium, and zirconium.

**6.** A method for recovering one or more target substances selected from metals and ions thereof, and metalloids and ions thereof from a solution containing the one or more target substances,
the method comprising a step of bringing the solution into contact with the porous material according to claim 1 or 2.

**7.** The method according to claim 6, wherein the one or more target substances are selected from transition elements

including rare earth elements, and ions thereof, and typical elements of Groups 1, 2, and 13 to 16, and ions thereof.

3
1
3
2
1
2
3
1
3
2
1
3
2
1
3
2
3
1
3
2
1
2
3
1
1
3
3
1
3
3
1
3
3
3
2
3
1
3
2

[FIG. 1]

## INTERNATIONAL SEARCH REPORT

International application No. **PCT/JP2024/038802**

**A. CLASSIFICATION OF SUBJECT MATTER**

***B01J 20/02***(2006.01)i; ***B01D 15/00***(2006.01)i; ***C01B 33/18***(2006.01)i
FI: B01J20/02 A; B01D15/00 N; C01B33/18 C

According to International Patent Classification (IPC) or to both national classification and IPC

**B. FIELDS SEARCHED**

Minimum documentation searched (classification system followed by classification symbols)

B01J20/00-20/34; B01D15/00-15/42; C01B33/00-33/46; C22B1/00-61/00; C02F1/28

Documentation searched other than minimum documentation to the extent that such documents are included in the fields searched

Published examined utility model applications of Japan 1922-1996
Published unexamined utility model applications of Japan 1971-2025
Registered utility model specifications of Japan 1996-2025
Published registered utility model applications of Japan 1994-2025

Electronic data base consulted during the international search (name of data base and, where practicable, search terms used)

JSTPlus/JMEDPlus/JST7580 (JDreamIII)

**C. DOCUMENTS CONSIDERED TO BE RELEVANT**

| Category* | Citation of document, with indication, where appropriate, of the relevant passages | Relevant to claim No. |
|---|---|---|
| Y | WO 2022/163833 A1 (MITSUI MINING & SMELTING CO., LTD.) 04 August 2022 (2022-08-04)<br>claims 1-10, paragraphs [0090]-[0133], [0150]-[0237] | 1-7 |
| Y | WO 2023/190445 A1 (MITSUI MINING & SMELTING CO., LTD.) 05 October 2023 (2023-10-05)<br>claims 1-10, paragraphs [0048]-[0142], [0176]-[0216] | 1-7 |
| Y | US 6251280 B1 (UNIVERSITY OF TENNESSEE RESEARCH CORPORATION) 26 June 2001 (2001-06-26)<br>column 3, line 57 - column 4, line 54, column 9, line 48 - column 10, line 8 | 1-7 |
| A | JP 2021-103761 A (SCREEN HOLDINGS CO., LTD.) 15 July 2021 (2021-07-15) | 1-7 |
| A | WO 2017/002871 A1 (SNG INC.) 05 January 2017 (2017-01-05) | 1-7 |

☑ Further documents are listed in the continuation of Box C.  ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **10 January 2025** | **28 January 2025** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (July 2022)

INTERNATIONAL SEARCH REPORT

International application No.
PCT/JP2024/038802

C. DOCUMENTS CONSIDERED TO BE RELEVANT

| Category* | Citation of document, with indication, where appropriate, of the relevant passages | Relevant to claim No. |
|---|---|---|
| A | KORENIUK, A. et al., Highly effective continuous-flow monolithic silica microreactors for acid catalyzed processes, Applied Catalysis. A: General, 2015, vol. 489, pp. 203-208, ISSN 0926-860X, particularly, p. 206 | 1-7 |
| A | SHI, Wenping et al., High performance adsorbents based on hierarchically porous silica for purifying multicomponent wastewater, Journal of Materials Chemistry, 2011, vol. 21 no. 39, pp. 15567-15574, ISSN 0959-9428, particularly, p. 15570 | 1-7 |

Form PCT/ISA/210 (second sheet) (July 2022)

**INTERNATIONAL SEARCH REPORT**
**Information on patent family members**

International application No.
**PCT/JP2024/038802**

| Patent document cited in search report | Publication date (day/month/year) | Patent family member(s) | Publication date (day/month/year) |
|---|---|---|---|
| WO 2022/163833 A1 | 04 August 2022 | US 2024/0165582 A1 claims 1-10, paragraphs [0114]-[0157], [0174]-[0261] | |
| | | US 2024/0082812 A1 | |
| | | US 2024/0157330 A1 | |
| | | WO 2022/163832 A1 | |
| | | WO 2022/163834 A1 | |
| | | EP 4286331 A1 | |
| | | EP 4286332 A1 | |
| | | EP 4286333 A1 | |
| | | CN 116761782 A | |
| | | KR 10-2023-0137904 A | |
| | | CN 116806208 A | |
| | | KR 10-2023-0132794 A | |
| | | KR 10-2023-0135080 A | |
| | | CN 116963998 A | |
| WO 2023/190445 A1 | 05 October 2023 | (Family: none) | |
| US 6251280 B1 | 26 June 2001 | (Family: none) | |
| JP 2021-103761 A | 15 July 2021 | WO 2021/131292 A1 | |
| WO 2017/002871 A1 | 05 January 2017 | US 2018/0185821 A1 | |
| | | US 2022/0072510 A1 | |
| | | EP 3318322 A1 | |
| | | CN 107708851 A | |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 2017002871 A
- US 2022163834 A


### Non-patent literature cited in the description


- *RSC Adv*, 2017, vol. 7, 56559-56565
- *J. Amer. Chem. Soc*, 1951, vol. 73, 373